# EUROPÄISCHE PATENTSCHRIFT

(11) **EP 2 660 432 B1**
(45) Veröffentlichungstag und Bekanntmachung des Hinweises auf die Patenterteilung: **26.12.2018**
(21) Anmeldenummer: 12001689.4
(22) Anmeldetag: 13.03.2012
(51) Int. Cl.: F01K 1/08, F01K 1/16, F01K 23/02, F01K 23/14, F01K 3/10, F01K 3/08, F01K 23/06, F02G 5/02

(54) **Verfahren und Vorrichtung zur Rückgewinnung von Wärme und deren Umwandlung in mechanische Leistung in einem Antriebssystem für Kraftfahrzeuge**
Method and device for recovering heat and converting it to mechanical performance in a drive system from motor vehicles
Procédé et dispositif de récupération de chaleur et sa transformation en puissance mécanique dans un système d'entraînement pour véhicule automatique

(30) Priorität: 22.06.2011 DE 102011105709
(43) Veröffentlichungstag der Anmeldung: 06.11.2013
(73) Patentinhaber: MAN Truck & Bus AG, 80995 München (DE)
(72) Erfinder: Raab, Gottfried, 4320 Perg (AT); Klammer, Josef, 4451 Garsten (AT)
(74) Vertreter: Liebl, Thomas

(56) Entgegenhaltungen:
- DE-A1-102008 027 172
- DE-C- 503 137
- JP-A- S5 820 911
- US-A- 5 327 987
- US-A- 5 385 214

## Beschreibung

Die vorliegende Erfindung betrifft ein Verfahren zur Rückgewinnung von Wärme und deren Umwandlung in mechanische Leistung in einem Antriebssystem für Kraftfahrzeuge gemäß dem Oberbegriff des Patentanspruchs 1, sowie eine Vorrichtung zur Durchführung eines derartigen Verfahrens nach dem Oberbegriff des Anspruchs 9.

Ein derartiges Verfahren ist zum Beispiel aus dem Dokument US-A-5 327 987 bekannt. Die konstruktive Auslegung der Systemkomponenten, insbesondere des Verdampfers, der Expansionsmaschine (Strömungsmaschine oder Hubkolbenmaschine) und des Kondensators, berücksichtigt einen klassischen Autobahn-Fernverkehrseinsatz, also einen quasi-stationären Betrieb der Brennkraftmaschine, und trägt in diesem Betrieb zu einer Erhöhung des Wirkungsgrades des Antriebssystems bei. Als verwertbare Wärmeträger können zum Beispiel das Kühlmittel oder die Ladeluft, insbesondere aber das Abgas der Brennkraftmaschine verwendet werden. Je instationärer der Betrieb der Brennkraftmaschine wird, wie etwa bei wechselnden Steigungen und Gefällen oder bei Fahrzeugen im Verteilerverkehr, desto weiter sinkt der erzielbare Wirkungsgrad der Wärmerückgewinnung ab.

Aufgabe der Erfindung ist es, ein Verfahren zur Rückgewinnung von Wärme und deren Umwandlung in mechanische Leistung in einem Antriebssystem für Kraftfahrzeuge so weiterzubilden, dass auch bei instationärem Betrieb ein zufriedenstellender Wirkungsgrad des Antriebssystems erzielbar ist. Ferner soll eine besonders geeignete Vorrichtung zur Durchführung eines Verfahrens zur Rückgewinnung von Wärme und deren Umwandlung in mechanische Leistung in einem Antriebssystem für Kraftfahrzeuge angegeben werden.

Diese Aufgabe wird gelöst mit den Merkmalen der unabhängigen Patentansprüche. Vorteilhafte Ausgestaltungen sind Gegenstand der jeweils darauf rückbezogenen Unteransprüche.

Gemäß Anspruch 1 wird ein Verfahren zur Rückgewinnung von Wärme und deren Umwandlung in mechanische Leistung in einem Antriebssystem für Kraftfahrzeuge vorgeschlagen, bei dem ein in einem Arbeitsmittelkreislauf geführtes Arbeitsmittel mit Hilfe wenigstens eines in den Arbeitsmittelkreislauf integrierten Verdampfers mittels Abwärme einer Brennkraftmaschine des Kraftfahrzeuges verdampft wird, wobei der erzeugte Dampf einer Expansionsmaschine zugeführt wird und der Abdampf aus der Expansionsmaschine anschließend in wenigstens einem Kondensator wieder in Flüssigphase rückgeführt wird, wobei in den Arbeitsmittelkreislauf stromab des wenigstens einen Verdampfers zumindest ein mittels einer Steuer- und/oder Regeleinrichtung steuer- und/oder regelbares Ventil sowie ein Dampfspeicher integriert sind. Erfindungsgemäß wird bei nicht benötigter Antriebsleistung der mit der Brennkraftmaschine gekoppelten Expansionsmaschine und/oder bei nicht befeuert betriebener Brennkraftmaschine (insbesondere im Schub- und/oder Motorbremsbetrieb) der erzeugte Dampf, vorzugsweise bei abgesperrter Expansionsmaschine, wenigstens zum Teil in den Dampfspeicher eingespeist. Der in den Dampfspeicher eingespeicherte Dampf wird bzw. kann anschließend, vorzugsweise unmittelbar anschließend an die Dampfeinspeicherphase, bei benötigter Antriebsleistung der Expansionsmaschine und/oder bei befeuert betriebener Brennkraftmaschine wenigstens teilweise wieder in den Arbeitsmittelkreislauf zum Antrieb der Expansionsmaschine rückgeführt werden. Das erfindungsgemäße Verfahren realisiert zwei wesentliche Verbesserungen im instationären Fahrbetrieb: Die Expansionsmaschine, deren mechanische Leistung insbesondere im Schub- und/oder Motorbremsbetrieb nicht benötigt wird, kann von der Dampfversorgung wenigstens teilweise, vorzugsweise ganz abgesperrt werden, gleichzeitig kann der im System noch erzeugte Dampf bzw. Heißdampf (durch Restwärmen, Trägheiten im System, Abgaswärme im Motorbremsbetrieb) in den Dampfspeicher gefördert und/oder eingespeichert werden. Bei wieder benötigter Antriebsleistung der Expansionsmaschine bzw. bei wieder befeuert betriebener Brennkraftmaschine kann dann die Expansionsmaschine unmittelbar mit dem Dampf bzw. Heißdampf des Dampfspeichers beaufschlagt werden und liefert somit nahezu verzögerungsfrei wieder zusätzliche Leistung. Damit kann bei instationärem Betrieb der Brennkraftmaschine eine Einspeisung von Expanderleistung auch in den verbrauchsintensiven Beschleunigungsphasen erfolgen, was deren Ansprechverhalten verbessert und dem Absinken des Wirkungsgrades des Antriebssystems im instationärem Betrieb entgegenwirkt.

Um zum Beispiel einen besonders gleichmäßigen Übergang vom aus dem Dampfspeicher bedienten Speicherbetrieb der Expansionsmaschine wieder in die reguläre Dampfversorgung über den Verdampfer herzustellen, wird gemäß einer besonders bevorzugten konkreten Verfahrensführung vorgeschlagen, dass während einer sich vorzugsweise unmittelbar an die Dampfeinspeicherphase, insbesondere den Schub- und/oder Motorbremsbetrieb, anschließenden Aufheizphase des Arbeitsmittelkreislaufs, zum einen der Dampfspeicher mit der Expansionsmaschine und zum anderen der wenigstens eine Verdampfer (oder zumindest einer von mehreren Verdampfern) mit einer die Expansionsmaschine kurzschließenden Umgehungsleitung verbunden wird, so dass die Expansionsmaschine solange mit Dampf aus dem Dampfspeicher beschickt werden kann, bis das Arbeitsmittel des Arbeitsmittelkreislaufes mittels des wenigstens einen Verdampfers wieder auf eine definierte und/oder vorgegebene Heißdampftemperatur aufgeheizt ist. Eine derartige Verfahrensführung kann zudem steuerungs- bzw. regelungstechnisch einfach realisiert und funktionssicher betrieben werden.

In Verbindung mit einer derartigen Aufheizphase wird weiter vorgeschlagen, dass bei Erreichen der definierten und/oder vorgegebenen Heißdampftemperatur die Dampfzufuhr aus dem Dampfspeicher gestoppt wird, weiter die Umgehungsleitung wieder abgesperrt wird und schließlich die Expansionsmaschine im herkömmlichen Expansionsmaschinenbetrieb wiederum lediglich mit Dampf aus dem wenigstens einen Verdampfer beschickt wird.

Alternativ oder zusätzlich hierzu kann vorgesehen sein, dass bei Erreichen der definierten und/oder vorgegebenen Heißdampftemperatur die Umgehungsleitung wieder abgesperrt wird und somit die Expansionsmaschine wieder wie im herkömmlichen Expansionsmaschinenbetrieb mit Dampf aus dem wenigstens einen Verdampfer beschickt wird, wobei die Dampfzufuhr aus dem Dampfspeicher erst dann gestoppt wird, wenn der Dampfspeicher ganz oder bis auf eine definierte Restmenge entleert ist. In einem derartigen Mischbetrieb wird sichergestellt, dass der Dampfspeicher in der gewünschten Weise geleert wird, wobei der vorrätige Restdampf in diesem Mischbetrieb an geeigneter Stelle vor der oder in der Expansionsmaschine eingeleitet und zugeführt wird.

Das nutzbare Volumen des Dampfspeichers wird in zweckmäßiger Weiterbildung bevorzugt derart ausgelegt, dass eine durchschnittlichen Motorbremsbetriebsphasen entsprechende Dampfmasse speicherbar ist. Ein derartiger Durchschnittswert kann gegebenenfalls empirisch ermittelt werden und stellt sicher, dass, zum Beispiel nach dem Be78fahren eines Gefälles des Kraftfahrzeuges, die Expansionsmaschine solange mit gespeichertem Dampf bzw. Heißdampf versorgt werden kann, bis das Verdampfungssystem mit dem zumindest einem Verdampfer wieder ausreichend betriebsbereit ist. Andererseits sind auch Einbaukriterien und Aufladezeiten des Dampfspeichers zu berücksichtigen.

Weiter ist gemäß einer besonders bevorzugten Verfahrensführung vorgesehen, dass bei Erreichen eines maximalen Betriebsdrucks des Dampfspeichers während der Dampfeinspeicherphase eine die Expansionsmaschine kurzschließende Umgehungsleitung freigegeben und/oder geöffnet wird. Dies erhöht die Betriebssicherheit und hilft Überdrücke im Dampfspeicher zu vermeiden. Über die Umgehungsleitung kann bei ausreichender Dampferzeugung die Systembereitschaft ohne Auskühlung von Leitungen und Funktionsteilen und ohne Systemüberdruck aufrechterhalten werden und somit ebenfalls zu einem verbesserten Ansprechverhalten beim Übergang in den Antriebsbetrieb beitragen.

Besonders bevorzugt dient während der Dampfeinspeicherphase bzw. während der Schub- und/oder Motorbremsphasen das Abgassystem der Brennkraftmaschine als Wärmequelle für den wenigstens einen Verdampfer, insbesondere wenn die Brennkraftmaschine im Abgasstrang wenigstens eine Drosseleinrichtung zur Generierung der Motorbremsleistung aufweist. Derartige Drosseleinrichtungen (zum Beispiel Abgasklappen, variable Steuerungen der Gaswechselventile, etc.) ermöglichen die Aufrechterhaltung hoher Abgastemperaturen auch in den Motorbremsbetriebsphasen. Grundsätzlich können, alternativ oder zusätzlich zu einem Abgassystem, aber auch andere fahrzeugseitige Wärmequellen verwendet werden, zum Beispiel ein Motorkühlmittel und/oder Ladeluft, um nur zwei weitere Beispiele zu nennen.

In einer vorteilhaften Zusatzfunktion kann der im Dampfspeicher gesammelte Dampf bzw. Heißdampf zusätzlich zum Ausblasen von kondensierendem Arbeitsmittel aus Funktionsteilen des Arbeitsmittelkreislaufs nach Außerbetriebsetzen der Brennkraftmaschine und/oder bei winterlichen Temperaturen verwendet werden. Damit kann zum Beispiel einem Einfrieren von Steuerventilen oder des Verdampfers bei Minusaußentemperaturen entgegengewirkt werden, ohne der Gefahr des Lufteintrags in den Arbeitsmittelkreislauf des Wärmerückgewinnungssystems. Diese Zusatzfunktion ist insbesondere bei gegenüber der Umgebung geschlossenen Arbeitsmittelkreisläufen vorteilhaft.

Der Dampfspeicher kann durch geeignete Isoliermittel wärmeisoliert ummantelt sein. Bevorzugt wird jedoch vorgeschlagen, dass der zum Beispiel zweischalig ausgeführte Dampfspeicher vom Abgas der Brennkraftmaschine beheizt wird und somit ohne Wärmeverluste auch über längere Zeitintervalle im Fahrbetrieb als Speichermedium wirksam bleibt.

Gemäß Anspruch 9 umfasst eine besonders vorteilhafte Vorrichtung zur Durchführung eines Verfahrens zur Rückgewinnung von Wärme und deren Umwandlung in mechanische Leistung in einem Antriebssystem für Kraftfahrzeuge, eine Brennkraftmaschine als Antriebsquelle, eine mit der Brennkraftmaschine trieblich gekoppelten Expansionsmaschine, die an wenigstens einen von Abwärme der Brennkraftmaschine beheizbaren Verdampfer angeschlossen ist, der in einen Arbeitsmittelkreislauf mit wenigstens einem Kondensator eingeschaltet ist. Erfindungsgemäß ist in einer Vorlaufleitung des Arbeitsmittelkreislaufs stromab des zumindest einen Verdampfers wenigstens ein mittels einer Steuer- und/oder Regeleinrichtung steuer- und/oder regelbares Ventil angeordnet, mittels dem bei nicht benötigter Antriebsleistung der Expansionsmaschine und/oder bei nicht befeuert betriebener Brennkraftmaschine, bevorzugt zumindest im Schub- und/oder Motorbremsbetrieb des Kraftfahrzeuges, die Vorlaufleitung mit einem Dampfspeicher verbindbar ist und/oder die Expansionsmaschine absperrbar ist.

In der Vorlaufleitung kann bevorzugt ein Mehrwegeventil vorgesehen sein, mittels dem baulich und steuerungstechnisch einfach die Expansionsmaschine und/oder der Dampfspeicher mit dem wenigstens einen Verdampfer verbindbar ist.

Des Weiteren kann an das den Dampf in den Dampfspeicher einsteuernde Ventil, das vorzugsweise ein Mehrwegeventil ist, zusätzlich eine die Expansionsmaschine kurzschließende Umgehungsleitung, vorzugsweise eine Umgehungsleitung mit einem Drosselventil, angeschlossen sein, wobei über das den Dampf in den Dampfspeicher einsteuernde Ventil der Dampfspeicher und/oder die Expansionsmaschine und/oder die Umgehungsleitung mit geringem leitungstechnischen Aufwand mit dem wenigstens einen Verdampfer verbindbar sind.

Dabei kann ferner die Umgehungsleitung stromab eines der Expansionsmaschine nachgeschalteten Rückschlagventils in die Abdampfleitung zum Kondensator einmünden. Das Rückschlagventil vermeidet zuverlässig, dass bei einer Dampfströmung über die Umgehungsleitung eine die Funktion der Expansionsmaschine beeinträchtigende Rückströmung in diese auftreten könnte.

Der Dampfspeicher kann über eine, ein steuerbares Ventil aufweisende, separate Druckleitung mit der Vorlaufleitung stromab des den Dampf in den Dampfspeicher einsteuernden Ventils bzw. Mehrwegeventils und stromauf der Expansionsmaschine mit dieser verbunden sein. Der Dampfspeicher kann aber alternativ auch über eine ein steuerbares Ventil aufweisende Druckleitung parallel zur Vorlaufleitung mit der Expansionsmaschine verbunden sein. Damit kann während der Expansion des Dampfes, und zwar bevorzugt in einem druckverminderten Bereich des Expansionsraums, gezielt Dampf leistungssteigernd in die Expansionsmaschine eingebracht werden. Dies hat den besonderen Vorteil, dass durch das größere Druckgefälle der Dampfspeicher in höherem Maße nutzbar bzw. im Speicherbetrieb auf einen niedrigeren Druck entleerbar ist.

Zur Nutzung der Abgasenergie kann der zumindest eine Verdampfer an das Abgasleitungssystem der Brennkraftmaschine entsprechend angebaut sein. Gegebenenfalls könnte aber auch das Kühlmittel der Brennkraftmaschine oder die Ladeluft bei einer aufgeladenen Brennkraftmaschine als Wärmeträger verwendet sein. Gleiches gilt für den Dampfspeicher bzw. dessen Gehäuse, das bevorzugt über die Abgase der Brennkraftmaschine beheizt ist.

In einer bevorzugten Zusatzfunktion des Wärmerückgewinnungssystems kann der Dampfspeicher über ein steuerbares Ventil und eine Ausblasleitung an die Eingangsseite des Verdampfers angeschlossen sein, wobei der im Dampfspeicher gespeicherte Heißdampf zum Ausblasen von gegebenenfalls abgelagertem flüssigem Arbeitsmittel im Verdampfer und im nachfolgenden Leitungssystem dient, um zum Beispiel eine Beschädigung des Verdampfers durch Einfrieren im Winterbetrieb weitgehendst auszuschließen, ohne der Gefahr des Lufteintrags in den Arbeitsmittelkreislauf des Wärmerückgewinnungssystems. Diese Zusatzfunktion ist insbesondere bei gegenüber der Umgebung geschlossenen Arbeitsmittelkreisläufen vorteilhaft.

Eine weitere Funktionsverbesserung des Wärmerückgewinnungssystems ist dadurch erzielbar, dass der Dampfspeicher mehrere Kammern aufweist, die über Überdruckventile (Füll- und Entleerungsventile) derart miteinander verbunden sind, dass deren Befüllung hintereinander bzw. getrennt voneinander und deren Entleerung gemeinsam erfolgen kann. Damit wird eine variable Aufladezeit des Dampfspeichers erzielt, mit relativ schnellem Druckaufbau in den einzelnen Kammern. Erreicht eine erste Kammer des Dampfspeichers den vorgegebenen Speicherdruck, so öffnet ein Überdruckventil (Füllventil) zur zweiten Kammer, usw. Umgekehrt entleeren sich im Speicherbetrieb der Expansionsmaschine alle Kammern gemeinsam durch Öffnen der weiteren Überdruckventile (Entleerungsventile). Teilgefüllte Kammern werden erst entleert, wenn alle weiteren befüllten Kammern auf den in der teilgefüllten Kammer herrschenden Druck gefallen sind. Das Öffnen bzw. Schließen der Überdruckventile ist durch die Druckverhältnisse in den Kammern gesteuert.

In vorteilhafter Ausgestaltung der Erfindung kann es ferner vorteilhaft sein, wenn mehrere, zum Beispiel zwei Verdampfer an das Abgasleitungssystem der Brennkraftmaschine angeschlossen sind, die mit jeweils einer über ein Ventil steuerbaren Zuführleitung im Arbeitsmittelkreislauf und einer zusammengefassten Vorlaufleitung verbunden sind und die über die Ventile gesteuert und/oder geregelt einzeln, gruppenweise oder gemeinsam mit Arbeitsmittel beaufschlagbar sind. Insbesondere kann es zweckmäßig sein, wenn bei hoher Leistungsanforderung der Brennkraftmaschine nur ein Verdampfer und bei niedriger Leistungsanforderung mehrere, zum Beispiel beide Verdampfer aktiv geschaltet sind, um dem jeweiligen Schluckvermögen der Expansionsmaschine einerseits und der Wärmeabfuhrleistung des Fahrzeugkühlsystems andererseits zu entsprechen. Gegebenenfalls kann es ferner möglich sein, dass im Speicherbetrieb bei abgeschalteter Expansionsmaschine aufgrund der verfügbaren Wärmen der einzelnen Wärmequellen nur ein Verdampfer und im regulären Antriebsbetrieb sämtliche bzw. beide Verdampfer aktiv geschaltet sind.

Der Dampfspeicher kann ferner über zumindest eine geodätisch tief liegende Kondensatleitung mit dem Arbeitsmittelkreislauf stromab des Kondensators verbunden sein, um sich gegebenenfalls ansammelndes Kondensat im Dampfspeicher zuverlässig abzuleiten.

Schließlich können besonders zweckmäßig in dem Arbeitsmittelkreislauf des Wärmerückgewinnungssystems flüssigkeitsseitig eine die Verdampfer aus einem Vorratsbehälter versorgende Speisepumpe, eine stromauf des Kondensators positionierte und in den Vorratsbehälter fördernde Absaugpumpe mit einem dazwischen geschalteten Filter und eine ein Druckbegrenzungsventil für die Speisepumpe aufweisende Rücklaufleitung zum Vorratsbehälter vorgesehen sein. Das im Vorratsbehälter befindliche Arbeitsmittel kann entionisiertes Wasser oder eine Mischung davon sein.

Ein Ausführungsbeispiel der Erfindung ist im Folgenden mit weiteren Einzelheiten und erzielbaren Vorteilen näher erläutert. Die beiliegende Zeichnung zeigt in:
Fig. 1 als Blockschaltbild eine pumpenbetriebene Wärmerückgewinnungsvorrichtung mit einer Expansionsmaschine für eine Brennkraftmaschine in einem Antriebssystem von Kraftfahrzeugen, mit u.a. zwei Verdampfern, einem Kondensator, einem Dampfspeicher und mehreren, steuerbaren Ventilen, in einem regulären Antriebsbetrieb mit dampfbeaufschlagter Expansionsmaschine;
Fig. 2 die Vorrichtung nach Fig. 1, jedoch im Schub- und/oder Motorbremsbetrieb und mit zur Aufladung des Dampfspeichers geschalteten Ventilen;
Fig. 3 die Vorrichtung nach Fig. 2 bei aufgeladenem Dampfspeicher und aktivierter Umgehungsleitung für die Expansionsmaschine;
Fig. 4 die Vorrichtung nach Fig. 3 im unmittelbar nach dem Übergang vom Schub- und/oder Motorbremsbetrieb in den Antriebsbetrieb der Brennkraftmaschine, mit zur Expansionsmaschine geöffnetem Dampfspeicher und noch geöffneter Umgehungsleitung zur Aufheizung des Arbeitsmittelkreislaufs;
Fig. 5 die Vorrichtung nach Fig. 4 in einem gesteuerten Mischbetrieb, bei dem die Verdampfer und der Dampfspeicher auf die Expansionsmaschine geschaltet sind;
Fig. 6 eine alternative Ausführungsform der Vorrichtung nach den Fig. 1 bis 5, bei der der Dampfspeicher mit mehreren Kammern ausgeführt ist und über eine separate Druckleitung unmittelbar mit der Expansionsmaschine verbindbar ist;
Fig. 7 eine erste beispielhafte Ausführungsform eines mehrkammrigen Dampfspeichers; und
Fig. 8 eine zweite beispielhafte Ausführungsform eines mehrkammrigen Dampfspeichers.

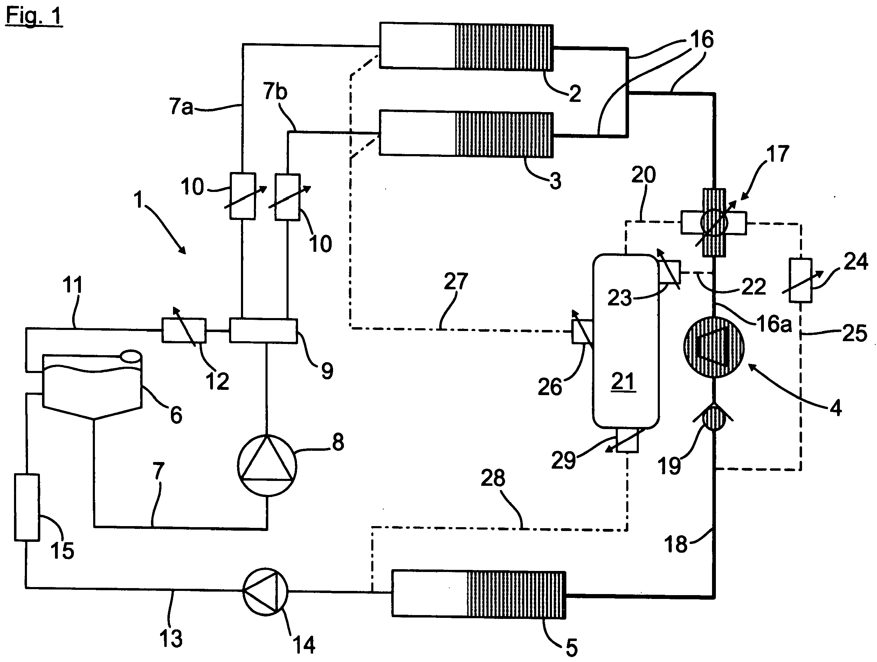

In der Fig. 1 ist als Blockschaltbild eine Vorrichtung zur Rückgewinnung von Wärme und deren Umwandlung in mechanische Leistung für ein Antriebssystem in Kraftfahrzeugen, insbesondere in Nutzfahrzeugen, wie zum Beispiel Lastkraftwagen oder Bussen, mit einer Brennkraftmaschine (nicht dargestellt) als Antriebsquelle gezeigt, die einen Arbeitsmittelkreislauf 1 aufweist, in den u.a. hier beispielhaft zwei Verdampfer 2, 3, eine Expansionsmaschine 4 und ein Kondensator 5 integriert sind.

Als Arbeitsmittel dient zum Beispiel entionisiertes Wasser, das in einem Vorratsbehälter 6 eingefüllt ist, an dessen Unterseite eine Zuführleitung 7 abzweigt. In der Zuführleitung 7 ist eine Speisepumpe 8 vorgesehen, die über einen Verteiler hier zwei separate Zuführleitungen 7a, 7b versorgt, die eingangsseitig an die Verdampfer 2, 3 angeschlossen sind. In die Zuführleitungen 7a, 7b ist hier weiter beispielhaft je ein elektrisches Proportional-Stromregelventil 10 eingebaut, mittels denen der Arbeitsmittelmassenstrom und damit die Dampferzeugung steuerbar ist.

An den Verteiler 9 ist eine Rücklaufleitung 11 mit einem integrierten Druckbegrenzungsventil 12 angeschlossen, wobei die Rücklaufleitung 11 in den Vorratsbehälter 6 einmündet.

Des Weiteren ist an den Kondensator 5 ausgangsseitig eine weitere Rücklaufleitung 13 angeschlossen, die ebenfalls in den Vorratsbehälter 6 einmündet und in der in Strömungsrichtung eine Kondensat-Absaugpumpe 14 und eine Filtereinheit 15 angeordnet sind.

Die hier lediglich beispielhaft zwei Verdampfer 2, 3 sind in nicht dargestellter Weise zum Beispiel an die Abgasanlage der Brennkraftmaschine angebaut bzw. mit der Abgasanlage wärmeübertragend gekoppelt und werden im Wärmetausch mit dem heißen Abgas der Brennkraftmaschine beaufschlagt, um das flüssige Arbeitsmittel in die Dampfphase zu überführen.

Das in den Verdampfern 2, 3 zu vorzugsweise heißem Dampf gewandelte Arbeitsmittel wird hier beispielhaft über zunächst zwei und dann eine zusammengefasste Vorlaufleitung 16 mit einem definierten bzw. vorgegebenem Überdruck zu der Expansionsmaschine 4 geleitet, wobei in der Vorlaufleitung 16 ein Mehrwegeventil 17 angeordnet ist, mittels dem der Heißdampf wie nachstehend beschrieben verteilbar ist.

Die Expansionsmaschine 4 kann zum Beispiel eine Strömungsmaschine oder Hubkolbenmaschine definierter Auslegung und Leistung sein, die, mit vorzugsweise unter Überdruck stehendem Dampf bzw. Heißdampf beaufschlagt, auf die Brennkraftmaschine als Zusatzantrieb direkt oder indirekt abtreibt. Die Expansionsmaschine 4 kann gegebenenfalls jedoch auch eine andere Einrichtung des Kraftfahrzeuges, zum Beispiel eine Klimaanlage, einen Kompressor, einen Lüfter, einen Generator etc. antreiben.

Ausgangsseitig ist an die Expansionsmaschine 4 eine Abdampfleitung 18 angeschlossen, in die zudem ein Rückschlagventil 19 eingeschaltet ist und die eingangsseitig in den das Arbeitsmittel durch Kondensierung wieder in die flüssige Phase überführenden Kondensator 5 einmündet.

An das Mehrwegeventil 17 ist eine erste Druckleitung 20 angeschlossen, die zu einem im Kraftfahrzeug angeordneten Dampfspeicher 21 führt. Der Dampfspeicher 21 ist in nicht dargestellter Weise wärmeisoliert und hinsichtlich seines Volumens bzw. seiner Speicherkapazität so ausgelegt, dass er im befüllten Zustand über ein definiertes Zeitintervall die Expansionsmaschine 4 mit unter Überdruck bzw. Systemdruck stehendem Heißdampf versorgen kann.

Dazu ist an dem Dampfspeicher 21 eine zweite Druckleitung 22 angeschlossen, die stromab des Mehrwegeventils 17, jedoch stromauf der Expansionsmaschine 4 in die Vorlaufleitung 16 bzw. deren Abschnitt 16a einmündet und in der ein steuerbares Ventil 23 angeordnet ist, mittels dem die Druckleitung 22 absperrbar oder zur Expansionsmaschine 4 aufsteuerbar ist.

Des Weiteren zweigt von dem Mehrwegeventil 17 eine Umgehungsleitung 25 mit einem integrierten Drosselventil 24 ab, die stromab des Rückschlagventils 19 an die Abdampfleitung 18 angeschlossen ist.

Von dem Dampfspeicher 21 geht des Weiteren eine über ein Ventil 26 steuerbare Ausblasleitung 27 (strichpunktiert dargestellt) ab, die an die Verdampfer 2, 3 an deren Einströmseite angeschlossen ist und die zum Beispiel bei jedem Stillsetzen der Brennkraftmaschine durch kurzzeitiges Öffnen des Ventils 26 die Verdampfer 2, 3 und die nachfolgenden Ventile und Leitungen unter Austrag gegebenenfalls angesammelten Kondensats mit Heißdampf entsprechend spült.

Über eine ebenfalls strichpunktiert dargestellte Kondensatleitung 28 mit einem geodätisch tief liegendem Ablassventil 29 am Dampfspeicher 21 kann gegebenenfalls im Dampfspeicher 21 angesammeltes Kondensat zeitweilig in die Rücklaufleitung 13 stromauf der Absaugpumpe 14 abgelassen werden.

Die angeführten Ventile 17, 23, 26 und 29 sowie die hier beispielhaft zwei Stromregelventile 10 in den Zuführleitungen 7a, 7b sind elektrisch über ein nicht dargestelltes, elektronisches Steuergerät wie nachstehend beschrieben angesteuert; das Steuergerät kann gegebenenfalls das elektronische Steuergerät der Brennkraftmaschine sein, bei dem die zur Steuerung erforderlichen Betriebsparameter wie Lastzustand der Brennkraftmaschine, Fahrzeuggeschwindigkeit, Motorschub- und Motorbremsbetrieb, Motortemperatur, Abgastemperatur, etc. ohnehin bereits erfasst sind und somit die Implementierung mit relativ geringem Mehraufwand realisierbar ist. Zusätzlich sind zumindest im Dampfspeicher 21 und/oder in der Vorlaufleitung 16 ein Drucksensor (nicht dargestellt) zur Vermeidung von unzulässigem Überdruck bzw. zur Erfassung des Systemdrucks vorgesehen.

Die Fig. 1 zeigt die Vorrichtung 1 zur Wärmerückgewinnung im regulärem Fahrbetrieb (mehr oder minder stationär), bei dem beide Verdampfer 2, 3 über die Stromregelventile 10 mit Arbeitsmittel beaufschlagt sind und Heißdampf erzeugen, der über die Vorlaufleitung 16 und das Mehrwegeventil 17 zur Expansionsmaschine 4 geleitet wird und von dieser durch Abgabe mechanischer Antriebsleistung entsprechend entspannt über die Abdampfleitung 18 zum Kondensator 5 strömt. Nach dem Kondensator 5 strömt das kondensierte, wieder flüssige Arbeitsmittel über die Filtereinheit 15 in den Vorratsbehälter 6 zurück.

Der beschriebene Kreislauf wird über die beiden Pumpen 8, 14 aufrechterhalten. Abhängig vom Betriebspunkt der Brennkraftmaschine, und damit den herrschenden Massenströmen und Temperaturen in den einzelnen Wärmequellen, ergibt sich durch die mittels der Stromregelventile 10 geregelte erzeugbare Dampfmenge und das drehzahlabhängige Schluckvermögen der Expansionsmaschine ein Systemdruck stromab der Verdampfer 2, 3. Die von dem Mehrwegeventil 17 abzweigenden Leitungen 20 und 25 sind abgesperrt (gestrichelt dargestellt). Ferner ist die Druckleitung 22 vom Dampfspeicher 21 zur Vorlaufleitung 16a über das Ventil 23 geschlossen.

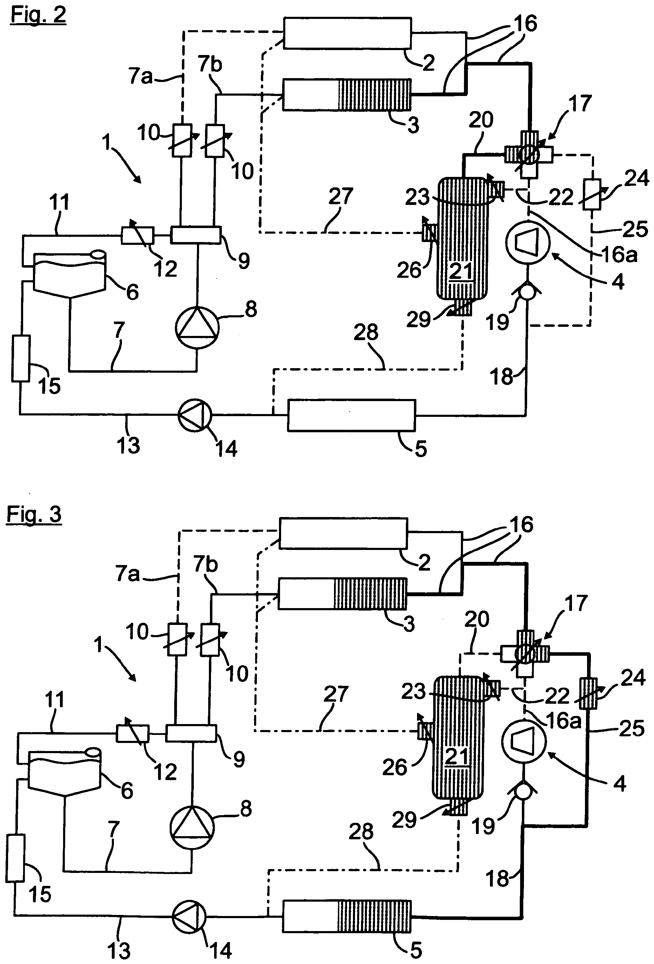

Die Fig. 2 zeigt die Vorrichtung 1 mit dem Unterschied, dass sich das Kraftfahrzeug in einem Motorbremsbetrieb befindet, wobei in der Brennkraftmaschine und/oder im Abgassystem (nicht dargestellt) angeordnete Drosseleinrichtungen (Gaswechselventile, Abgasklappen, etc.) zur Generierung der Motorbremswirkung aktiviert sind und dadurch hohe Abgastemperaturen hervorrufen.

In diesem Betriebszustand ist das Mehrwegeventil 17 über das Motorsteuergerät zunächst so umgeschaltet, dass nunmehr der Abschnitt 16a der Vorlaufleitung 16 unterbrochen (gestrichelt dargestellt) und die Druckleitung 20 zum Dampfspeicher 21 geöffnet ist. Demzufolge wird der Dampfspeicher 21 über das Zeitintervall des Motorbremsbetriebes oder bis zum Erreichen eines maximalen Systemdrucks mit Heißdampf aufgeladen.

Ist gegebenenfalls der maximale System- bzw. Behälterdruck während des Motorbremsbetriebs erreicht, so schaltet das Mehrwegeventil 17 wie in Fig. 3 dargestellt auf Drosselbetrieb um, indem die Umgehungsleitung 25 mit dem integrierten Drosselventil 24 geöffnet wird und somit den überschüssigen Heißdampf in die Abdampfleitung 18 ableitet. Der gegebenenfalls anliegende Drosselbetrieb stellt sicher, dass der Betrieb des Systems stromauf des Mehrwegeventils 17 aufrecht erhalten bleibt. Der im Dampfspeicher 21 befindliche, unter Überdruck stehende Heißdampf ist durch die geschlossenen Ventile 17, 23, 26 und 29 hermetisch abgesperrt.

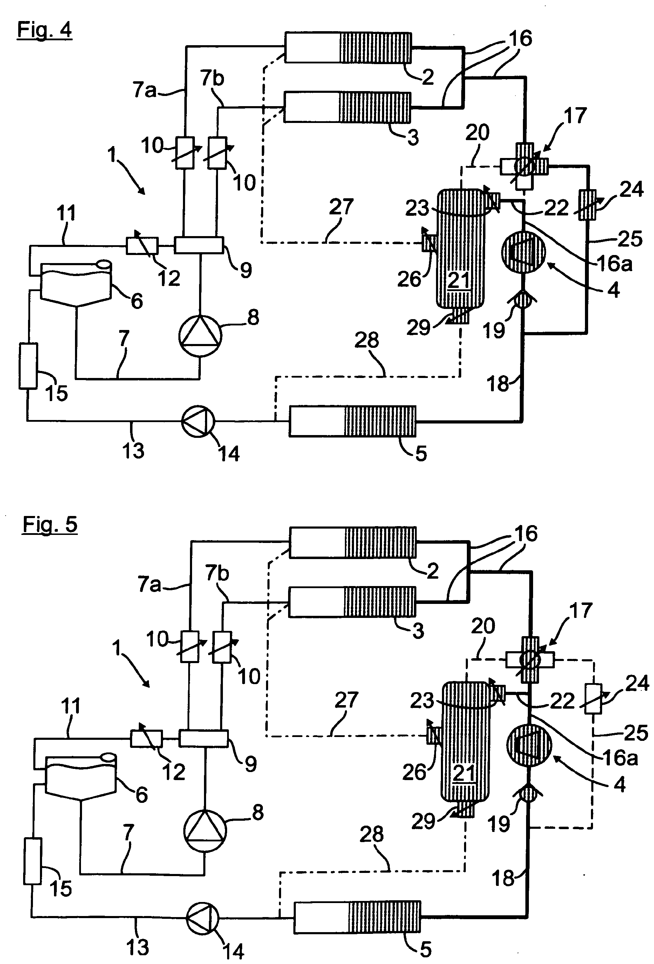

Geht die Brennkraftmaschine nach dem Motorbremsbetrieb wieder in den befeuerten Antriebsbetrieb über, so wird bei noch fortgeführtem Drosselbetrieb gemäß Fig. 4 das Ventil 23 am Dampfspeicher 21 aufgesteuert und es wird nahezu verzögerungsfrei die Expansionsmaschine 4 über die Druckleitung 22 und die Vorlaufleitung 16a mit dem gespeicherten Heißdampf beaufschlagt und steht somit sofort zur Abgabe der maximalen Zusatz-Antriebsleistung zur Verfügung. Gleichzeitig kann im Drosselbetrieb das System stromauf des Mehrwegeventils 17 hochgefahren werden, bis bei Erreichen der definierten und/oder vorgegebenen Heißdampftemperatur die Umgehungsleitung wieder abgesperrt wird und somit die Expansionsmaschine wieder wie im herkömmlichen Expansionsmaschinenbetrieb mit Dampf aus dem wenigstens einen Verdampfer beschickt wird.

Die Fig. 5 schließlich zeigt den Übergangsbereich vom Speicherbetrieb der Expansionsmaschine in den quasi stationären Betrieb, bei der das Mehrwegeventil 17 wieder so geschaltet ist, dass es die Verdampfer 2, 3 bzw. die Vorlaufleitung 16, 16a mit der Expansionsmaschine 4 verbindet (gemäß Fig. 1), aber das Ventil 23 am Dampfspeicher 21 noch geöffnet ist.

Dieser Mischbetrieb ist zum Beispiel dann zweckmäßig, wenn im Dampfspeicher 21 noch verwertbarer Dampfdruck vorliegt, der dann dem Systemdruck in der Vorlaufleitung 16, 16a überlagert wird. Die Steuerung kann dabei durch Vergleich der Druckwerte von Drucksensoren im Dampfspeicher 21 und in der Vorlaufleitung 16 über das elektronische Steuergerät erfolgen.

Ist der Dampfspeicher 21 entleert bzw. dessen Dampfdruck zu niedrig, so wird das Ventil 23 in der Druckleitung 22 wieder geschlossen und es liegt die reguläre Dampfversorgung der Expansionsmaschine 4 gemäß Fig. 1 direkt über die Verdampfer 2 und/oder 3 vor.

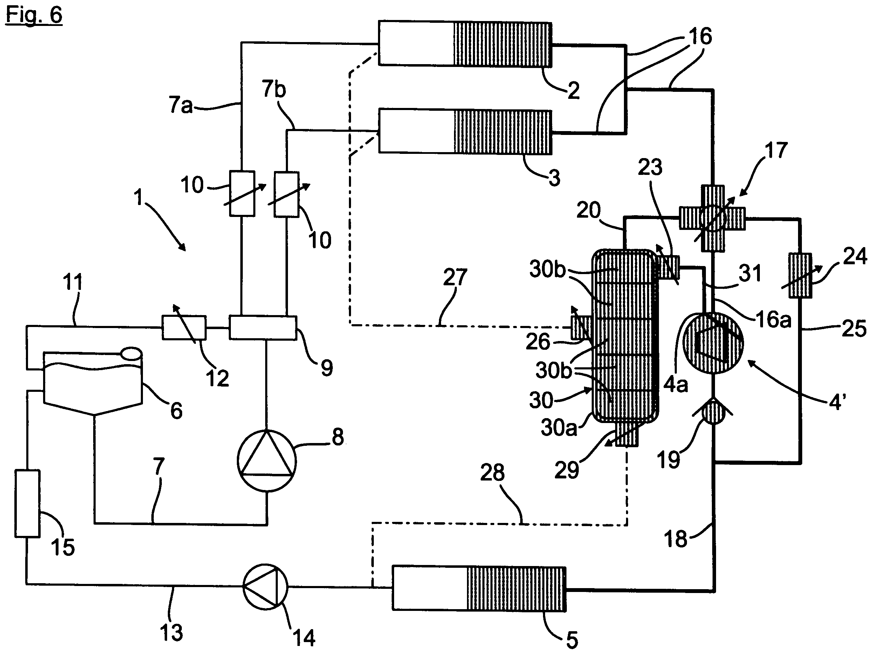

Die Fig. 6 zeigt eine alternative Ausführung der Wärmerückgewinnungsvorrichtung 1', die jedoch nur soweit beschrieben ist, als sie sich von den Fig. 1 bis 5 unterscheidet. Gleiche Teile sind mit gleichen Bezugszeichen versehen.

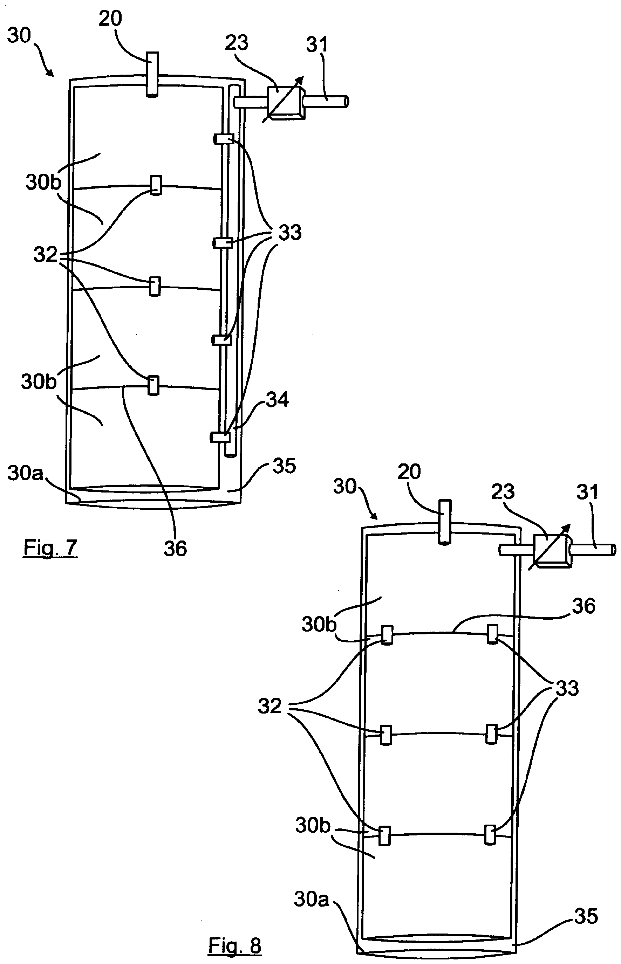

In der Fig. 6 ist ein Dampfspeicher 30 verwendet, dessen Gehäuse 30a doppelwandig ausgeführt ist. Der Dampfspeicher aus Figur 6 ist detailliert, ohne die peripheren Funktionsbauteile bzw. Schnittstellen zum Arbeitsmittelkreislauf 17, 4, 4', 29, 28, 26, 27, in unterschiedlichen Ausführungsformen in den Fig. 7 und 8 dargestellt. Die zwischen den Gehäusewänden befindliche Schale 35 kann zur Vermeidung von Wärmeverlusten evakuiert, mit Luft oder einem zweckmäßigen Isoliermaterial gefüllt, oder in nicht dargestellter Weise zum Beispiel an das Abgassystem der Brennkraftmaschine angeschlossen bzw. über dieses beheizt sein.

Ferner ist der Dampfspeicher 30 mittels Trennwänden 36 in mehrere Kammern 30b unterteilt. Diese Kammern sind über Überdruckventile (Füllventile 32 und Entleerungsventile 33) derart miteinander verbunden, dass deren Befüllung hintereinander bzw. getrennt voneinander und deren Entleerung gemeinsam erfolgen kann. Es wird somit im Speicherbetrieb zunächst die der Druckleitung 20 am nächsten liegende Kammer 30b und nach Erreichen des vorgegebenen Dampfdrucks die dieser Kammer 30b benachbarte Kammer 30b usw. befüllt. Damit ist trotz relativ großem Gesamtvolumen des Dampfspeichers 30 schnell ein ausreichender Dampfdruck vorhanden, der sich dann von Kammer 30b zu Kammer 30b fortpflanzt und jederzeit, auch bei kurzer Befülldauer, eine wirkungsvolle Beaufschlagung der Expansionsmaschine 4 mit hohem Druck sicherstellt.

Die Entleerung des Dampfspeichers 30 beim Wechsel vom Schub- und/oder Motorbremsbetrieb in den Antriebsbetrieb der Brennkraftmaschine erfolgt in allen Kammern gemeinsam durch Öffnen des Ventils 23 und in Folge durch Öffnen der weiteren Überdruckventile (Entleerungsventile 33), wobei die abgehende, von dem Ventil 23 gesteuerte Druckleitung 31 gemäß der Ausführungsform der Fig. 7 an eine Dampfsammelleiste 34 angeschlossen ist. In der alternativen Ausführungsform der Fig. 8 erfolgt die Entleerung der Kammern durch die Entleerungsventile 33 hintereinander. Teilgefüllte Kammern werden erst entleert, wenn alle weiteren befüllten Kammern auf den in der teilgefüllten Kammer herrschenden Druck gefallen sind. Das Öffnen bzw. Schließen der Überdruckventile ist durch die Druckverhältnisse in den Kammern gesteuert.

Die Druckleitung 31 ist hier ferner als separate, parallel zur Vorlaufleitung 16a verlaufende Leitung ausgeführt und an einen druckverminderten Einlass 4a der Expansionsmaschine 4' angeschlossen. Dazu kann an der Expansionsmaschine 4' zum Beispiel ein weiteres Einlassventil (nicht dargestellt) vorgesehen sein, mit dem der im Dampfspeicher 30 gespeicherte Heißdampf direkt in den Expansionsraum geleitet wird. Da die Drücke hier während der Expansionsphase zeitweise wesentlich geringer sind als am Dampfeinlass der Expansionsmaschine 4', kann der Dampfspeicher 30 zu niedrigeren Drücken entleert und damit dessen Kapazität erhöht und der gespeicherte Heißdampf effizienter genutzt werden.

Ferner ergibt sich aufgrund der geringeren gespeicherten Dampfrestmengen eine geringere Kondensatansammlung im Dampfspeicher 30.

Die Funktionsweise der Wärmerückgewinnungsvorrichtung 1' (Fig. 6) ist im Übrigen gleich der in den Fig. 1 bis 5 beschriebenen Vorrichtung 1 und deshalb nicht weiter ausgeführt.

Der Dampfspeicher 21 bzw. 30 kann auch neben dem beschriebenen Motorbremsbetrieb (Dauerbremse) bereits jeweils im Schubbetrieb und in besonderen Betriebsfällen auch im befeuerten Betrieb des Kraftfahrzeuges durch entsprechende Umschaltung des Mehrwegeventils 17 aufgeladen und gleichzeitig die Beschickung der Expansionsmaschine 4, 4' unterbrochen werden.

**BEZUGSZEICHENLISTE**

| | |
|---|---|
| 1 Wärmerückgewinnungsvorrichtung | 30 Dampfspeicher |
| 2 Verdampfer | 30a Gehäuse |
| 3 Verdampfer | 30b Kammern |
| 4 Expansionsmaschine | 31 separate Druckleitung |
| 4a zweiter Einlass | 32 Füllventile |
| 5 Kondensator | 33 Entleerungsventile |
| 6 Vorratsbehälter | 34 Dampfsammelleiste |
| 7 Zuführleitung | 35 Isolier- /Heizschale |
| 7a Zuführleitung | 36 Trennwände |
| 7b Zuführleitung | |
| 8 Speisepumpe | |
| 9 Verteilerrohr | |
| 10 Stromregelventile | |
| 11 Rücklaufleitung | |
| 12 Druckbegrenzungsventil | |
| 13 Rücklaufleitung | |
| 14 Absaugpumpe | |
| 15 Filtereinheit | |
| 16 Vorlaufleitung | |
| 16a Vorlaufleitungsabschnitt | |
| 17 Mehrwegeventil | |
| 18 Abdampfleitung | |
| 19 Rückschlagventil | |
| 20 Druckleitung | |
| 21 Dampfspeicher | |
| 22 Druckleitung | |
| 23 Ventil | |
| 24 Drosselventil | |
| 25 Umgehungsleitung | |
| 26 Ventil | |
| 27 Ausblasleitung | |
| 28 Leitung | |
| 29 Ablassventil | |

## Patentansprüche

1. Verfahren zur Rückgewinnung von Wärme und deren Umwandlung in mechanische Leistung in einem Antriebssystem für Kraftfahrzeuge, bei dem ein in einem Arbeitsmittelkreislauf geführtes Arbeitsmittel mit Hilfe wenigstens eines in den Arbeitsmittelkreislauf integrierten Verdampfers (2, 3) mittels Abwärme einer Brennkraftmaschine des Kraftfahrzeuges verdampft wird, wobei der erzeugte Dampf einer Expansionsmaschine (4; 4') zugeführt wird und der Abdampf aus der Expansionsmaschine (4; 4') anschließend in wenigstens einem Kondensator (5) wieder in Flüssigphase rückgeführt wird, wobei in den Arbeitsmittelkreislauf stromab des wenigstens einen Verdampfers (2, 3) zumindest ein mittels einer Steuer- und/oder Regeleinrichtung steuer- und/oder regelbares Ventil (17, 23) sowie ein Dampfspeicher (21; 30) integriert sind, **dadurch gekennzeichnet, dass** bei nicht benötigter Antriebsleistung der mit der Brennkraftmaschine gekoppelten Expansionsmaschine (4; 4') und/oder bei nicht befeuert betriebener Brennkraftmaschine der erzeugte Dampf, wenigstens zum Teil in den Dampfspeicher (21; 30) eingespeist wird, wobei der in den Dampfspeicher (21; 30) eingespeicherte Dampf bei benötigter Antriebsleistung der Expansionsmaschine (4; 4') und/oder bei befeuert betriebener Brennkraftmaschine wenigstens teilweise wieder in den Arbeitsmittelkreislauf zum Antrieb der Expansionsmaschine (4; 4') rückgeführt wird.

2. Verfahren nach Anspruch 1, **dadurch gekennzeichnet, dass** in den Dampfspeicher (21; 30) zumindest während einer die Dampfeinspeicherphase bildenden Schubbetriebsphase und/oder Motorbremsbetriebsphase des Kraftfahrzeuges Dampf eingespeichert wird und dementsprechend der Dampfspeicher (21; 30) mit wenigstens einem der Verdampfer (2, 3) strömungsverbunden ist.

3. Verfahren nach Anspruch 1 oder 2, **dadurch gekennzeichnet, dass** in einer sich vorzugsweise unmittelbar an die Dampfeinspeicherphase anschließenden Aufheizphase zum einen der Dampfspeicher (21; 30) mit der Expansionsmaschine (4; 4') und zum anderen der wenigstens eine Verdampfer (2, 3) oder wenigstens ein Verdampfer (2, 3) mit einer die Expansionsmaschine (4; 4') kurzschließenden Umgehungsleitung (25) verbunden wird, so dass die Expansionsmaschine (4; 4') vorzugsweise solange alleine mit Dampf aus dem Dampfspeicher (21; 30) beschickt wird, bis das Arbeitsmittel des Arbeitsmittelkreislaufes mittels des wenigstens einen Verdampfers (2, 3) auf eine definierte und/oder vorgegebene Heißdampftemperatur aufgeheizt ist.

4. Verfahren nach Anspruch 3, **dadurch gekennzeichnet, dass** bei Erreichen der definierten und/oder vorgegebenen Heißdampftemperatur die Dampfzufuhr aus dem Dampfspeicher (21; 30) gestoppt wird, weiter die Umgehungsleitung (25) wieder abgesperrt wird und schließlich die Expansionsmaschine (4; 4') im herkömmlichen Expansionsmaschinenbetrieb lediglich mit Dampf aus dem wenigstens einen Verdampfer (2; 3) beschickt wird.

5. Verfahren nach Anspruch 3 oder 4, **dadurch gekennzeichnet, dass** bei Erreichen der definierten und/oder vorgegebenen Heißdampftemperatur die Umgehungsleitung (25) wieder abgesperrt wird und somit die Expansionsmaschine (4; 4') wieder wie im herkömmlichen Expansionsmaschinenbetrieb mit Dampf aus dem wenigstens einen Verdampfer (2; 3) beschickt wird, wobei die Dampfzufuhr aus dem Dampfspeicher (21; 30) erst dann gestoppt wird, wenn der Dampfspeicher (21; 30) ganz oder bis auf eine definierte Restmenge entleert ist.

6. Verfahren nach einem der vorhergehenden Ansprüche, **dadurch gekennzeichnet, dass** bei Erreichen eines maximalen Betriebsdrucks des Dampfspeichers (21; 30) während der Dampfeinspeicherphase eine die Expansionsmaschine (4; 4') kurzschließende Umgehungsleitung (25) freigegeben und/oder geöffnet wird.

7. Verfahren nach einem der vorhergehenden Ansprüche, **dadurch gekennzeichnet, dass** während der Schub- und/oder Motorbremsphasen das Abgassystem der Brennkraftmaschine als Wärmequelle für den wenigstens einen Verdampfer (2, 3) dient, insbesondere wenn die Brennkraftmaschine im Abgasstrang wenigstens eine Drosseleinrichtung zur Generierung der Motorbremsleistung aufweist, und/oder dass der Dampfspeicher (30) vom Abgas der Brennkraftmaschine beheizt wird.

8. Verfahren nach einem der vorhergehenden Ansprüche, **dadurch gekennzeichnet, dass** der im Dampfspeicher (21; 30) gesammelte Dampf, insbesondere bei Außerbetriebsetzen der Brennkraftmaschine und/oder bei winterlichen Temperaturen, zum Ausblasen von kondensierendem Arbeitsmittel aus Funktionsteilen (2, 3, 17, 16, 18) des Arbeitsmittelkreislaufs verwendet wird.

9. Vorrichtung zur Durchführung eines Verfahrens zur Rückgewinnung von Wärme und deren Umwandlung in mechanische Leistung in einem Antriebssystem für Kraftfahrzeuge, insbesondere zur Durchführung eines Verfahrens nach einem der vorhergehenden Verfahrensansprüche, mit einer Brennkraftmaschine als Antriebsquelle, einer mit der Brennkraftmaschine trieblich gekoppelten Expansionsmaschine (4; 4'), die an wenigstens einen von Abwärme der Brennkraftmaschine beheizbaren Verdampfer (2, 3) angeschlossen ist, der in einen Arbeitsmittelkreislauf mit wenigstens einem Kondensator (5) eingeschaltet ist, **dadurch gekennzeichnet, dass** in einer Vorlaufleitung (16) des Arbeitsmittelkreislaufs stromab des zumindest einen Verdampfers (2, 3) wenigstens ein mittels einer Steuer- und/oder Regeleinrichtung steuer- und/oder regelbares Ventil (17, 23) angeordnet ist, mittels dem die Vorlaufleitung (16) bei nicht benötigter Antriebsleistung der Expansionsmaschine (4; 4') und/oder bei nicht befeuert betriebener Brennkraftmaschinemit einem Dampfspeicher (21; 30) verbindbar und/oder die Expansionsmaschine (4; 4') absperrbar ist.

10. Vorrichtung nach Anspruch 9, **dadurch gekennzeichnet, dass** in der Vorlaufleitung (16) ein Mehrwegeventil (17) vorgesehen ist, mittels dem die Expansionsmaschine (4; 4') und/oder der Dampfspeicher (21; 30) mit dem wenigstens einen Verdampfer (2, 3) verbindbar ist.

11. Vorrichtung nach Anspruch 9 oder 10, **dadurch gekennzeichnet, dass** an das den Dampf in den Dampfspeicher (21; 30) einsteuernde Ventil (17), das insbesondere ein Mehrwegeventil ist, zusätzlich eine die Expansionsmaschine (4; 4') kurzschließende Umgehungsleitung (25), vorzugsweise eine Umgehungsleitung (25) mit einem Drosselventil (24), angeschlossen ist, wobei über das den Dampf in den Dampfspeicher (21; 30) einsteuernde Ventil (17) der Dampfspeicher (21; 30) und/oder die Expansionsmaschine (4; 4') und/oder die Umgehungsleitung (25) mit der Vorlaufleitung (16) und damit mit dem wenigstens einen Verdampfer (2, 3) verbindbar sind.

12. Vorrichtung nach einem der Ansprüche 9 bis 11, **dadurch gekennzeichnet, dass** eine die Expansionsmaschine (4; 4') kurzschließende Umgehungsleitung (25) stromab eines in eine Abdampfleitung (18) angeordneten Rückschlagventils (19) in die Abdampfleitung (18) einmündet, wobei die Abdampfleitung (18) von der Expansionsmaschine (4; 4') weg zum Kondensator (5) geführt ist.

13. Vorrichtung nach einem der Ansprüche 9 bis 12, **dadurch gekennzeichnet, dass** der Dampfspeicher (21) über eine, ein steuerbares Ventil (23) aufweisende Druckleitung (22) mit der Vorlaufleitung (16a) stromab eines den Dampf in den Dampfspeicher (21; 30) einsteuernden Ventils (17), insbesondere eines Mehrwegeventils, und stromauf der Expansionsmaschine (4) mit dieser verbunden ist.

14. Vorrichtung nach einem der Ansprüche 9 bis 13, **dadurch gekennzeichnet, dass** der Dampfspeicher (30) über eine, ein steuerbares Ventil (23) aufweisende Druckleitung (31) parallel zur Vorlaufleitung (16a) mit einem druckverminderten Bereich (4a) des Expansionsraums in der Expansionsmaschine (4') verbunden ist.

15. Vorrichtung nach einem der Ansprüche 9 bis 14, **dadurch gekennzeichnet, dass** der zumindest eine Verdampfer (2, 3) mit einem Abgasleitungssystem der Brennkraftmaschine gekoppelt ist und/oder dass der Dampfspeicher (30) oder dessen Gehäuse (30a) über das Abgasleitungssystem der Brennkraftmaschine beheizt ist.

16. Vorrichtung nach einem der Ansprüche 9 bis 15, **dadurch gekennzeichnet, dass** der Dampfspeicher (21; 30) über ein steuerbares Ventil (26) und eine Ausblasleitung (27) an eine Eingangsseite des wenigstens einen Verdampfers (2, 3) angeschlossen ist.

17. Vorrichtung nach einem der vorhergehenden Ansprüche 9 bis 16, **dadurch gekennzeichnet, dass** der Dampfspeicher (30) mehrere Kammern (30b) aufweist, die über Überdruckventile, insbesondere Füllventile (32) und Entleerungsventile (33), derart miteinander verbunden sind, dass deren Befüllung hintereinander oder getrennt voneinander und deren Entleerung hintereinander oder im wesentlichen gemeinsam erfolgt, und/oder dass der Dampfspeicher (21; 30) über zumindest eine Kondensatleitung (28) mit dem Arbeitsmittelkreislauf stromab des Kondensators (5) verbunden ist und/oder dass das nutzbare Volumen des Dampfspeichers (21; 30) derart ausgelegt ist, dass eine durchschnittlichen Bremsbetriebsphasen entsprechende Dampfmasse einspeicherbar ist.

18. Vorrichtung nach einem der vorhergehenden Ansprüche 9 bis 17, **dadurch gekennzeichnet, dass** mehrere Verdampfer (2, 3) an das Abgasleitungssystem der Brennkraftmaschine angeschlossen sind, die mit jeweils einer über ein Stromregelventil (10) steuerbaren Zuführleitung (7a, 7b) im Arbeitsmittelkreislauf und einer vorzugsweise zusammengefassten Vorlaufleitung (16) verbunden sind und die über die Stromregelventile (10) gesteuert und/oder geregelt einzeln, gruppenweise oder gemeinsam mit Arbeitsmittel beaufschlagbar sind.

19. Vorrichtung nach einem der Ansprüche 9 bis 18, **dadurch gekennzeichnet, dass** in dem Arbeitsmittelkreislauf flüssigkeitsseitig eine die Verdampfer (2, 3) aus einem Vorratsbehälter (6) versorgende Speisepumpe (8), eine stromauf des Kondensators (5) positionierte und in den Vorratsbehälter (6) fördernde Absaugpumpe (14), bevorzugt mit einer dazwischen geschalteten Filtereinheit (15), und eine ein Druckbegrenzungsventil (12) für die Speisepumpe (8) aufweisende Rücklaufleitung (11) zum Vorratsbehälter (6) vorgesehen sind.

20. Kraftfahrzeug, insbesondere Nutzfahrzeug, höchst bevorzugt Lastkraftwagen oder Bus, mit einer Vorrichtung nach einem der Ansprüche 9 bis 19.

## Claims

1. Method for recovering heat and converting it into mechanical power in a drive system for motor vehicles, in which a working medium carried in a working medium circuit is evaporated with the aid of at least one evaporator (2, 3) integrated into the working medium circuit by means of waste heat from an internal combustion engine of the motor vehicle, the vapour generated being fed to an expansion machine (4; 4'), and the exhaust vapour from the expansion machine (4; 4') then being converted back into the liquid phase in at least one condenser (5), wherein at least one valve (17, 23), which can be subjected to open-loop and/or closed-loop control by means of an open-loop and/or closed-loop control device, and a vapour accumulator (21; 30) are integrated into the working medium circuit downstream of the at least one evaporator (2, 3) **characterized in that** when the motive power of the expansion machine (4; 4') coupled to the internal combustion engine is not required and/or the internal combustion engine is not being operated under power, the vapour generated is fed at least in part into the vapour accumulator (21; 30), wherein the vapour stored in the vapour accumulator (21; 30) is fed back at least in part into the working medium circuit, in order to drive the expansion machine (4; 4') if the motive power of the expansion machine (4; 4') is required and/or the internal combustion engine is being operated under power.

2. Method according to Claim 1, **characterized in that** vapour is stored in the vapour accumulator (21; 30) at least during an overrun operating phase and/or engine braking operating phase of the motor vehicle, which form the vapour storage phase, and the vapour accumulator (21; 30) is accordingly connected in terms of flow to at least one of the evaporators (2, 3).

3. Method according to Claim 1 or 2, **characterized in that,** in a heating phase which preferably immediately follows the vapour storage phase, the vapour accumulator (21; 30) is connected to the expansion machine (4; 4'), on the one hand, and the at least one evaporator (2, 3) or at least one evaporator (2, 3) is connected to a bypass line (25) which short-circuits the expansion machine (4; 4'), on the other hand, the expansion machine (4; 4') thus preferably being supplied exclusively with vapour from the vapour accumulator (21; 30) until the working medium in the working medium circuit has been heated by means of the at least one evaporator (2, 3) to a defined and/or predetermined superheated vapour temperature.

4. Method according to Claim 3, **characterized in that** the supply of vapour from the vapour accumulator (21; 30) is stopped when the defined and/or predetermined superheated vapour temperature is reached and, furthermore, the bypass line (25) is shut off again and, finally, the expansion machine (4; 4') is supplied only with vapour from the at least one evaporator (2, 3) in conventional expansion machine operation.

5. Method according to Claim 3 or 4, **characterized in that** the bypass line (25) is shut off again when the defined and/or predetermined superheated vapour temperature is reached, and the expansion machine (4; 4') is thus once again supplied with vapour from the at least one evaporator (2; 3), as in conventional expansion machine operation, the supply of vapour from the vapour accumulator (21; 30) being stopped only when the vapour accumulator (21; 30) has been emptied completely or down to a defined residual quantity.

6. Method according to one of the preceding claims, **characterized in that** a bypass line (25) that short-circuits the expansion machine (4; 4') is released and/or opened when a maximum operating pressure of the vapour accumulator (21; 30) is reached during the vapour storage phase.

7. Method according to one of the preceding claims, **characterized in that** the exhaust system of the internal combustion engine is used as a heat source for the at least one evaporator (2, 3) during the overrun and/or engine braking phases, especially if the internal combustion engine has at least one throttling device in the exhaust section for generating the engine braking power, and/or **in that** the vapour accumulator (30) is heated by the exhaust gas from the internal combustion engine.

8. Method according to one of the preceding claims, **characterized in that** the vapour collected in the vapour accumulator (21; 30) is used to blow condensing working medium out of functional components (2, 3, 17, 16, 18) of the working medium circuit, especially when the internal combustion engine is stopped and/or at winter temperatures.

9. Apparatus for carrying out a method for recovering heat and converting it into mechanical power in a drive system for motor vehicles, in particular for carrying out a method according to one of the preceding method claims, having an internal combustion engine as a source of propulsion, an expansion machine (4; 4'), which is coupled in terms of drive to the internal combustion engine and is connected to at least one evaporator (2, 3), which can be heated by waste heat from the internal combustion engine and is inserted into a working medium circuit containing at least one condenser (5), **characterized in that** a forward-flow line (16) of the working medium circuit can have arranged therein, downstream of the at least one evaporator (2, 3), at least one valve (17, 23), which can be subjected to open-loop and/or closed-loop control by means of an open-loop and/or closed-loop control device and by means of which the forward-flow line (16) can be connected to a vapour accumulator (21; 30) and/or the expansion machine (4; 4') can be shut off when the motive power of the expansion machine (4; 4') is not required and/or when the internal combustion engine is not being operated under power.

10. Apparatus according to Claim 9, **characterized in that** a multi-way valve (17), by means of which the expansion machine (4; 4') and/or the vapour accumulator (21; 30) can be connected to the at least one evaporator (2, 3), is provided in the forward-flow line (16).

11. Apparatus according to Claim 9 or 10, **characterized in that** a bypass line (25) which short-circuits the expansion machine (4; 4'), preferably a bypass line (25) containing a throttle valve (24), is additionally connected to the valve (17) which feeds the vapour into the vapour accumulator (21; 30), which is especially a multi-way valve, it being possible for the vapour accumulator (21; 30) and/or the expansion machine (4; 4') and/or the bypass line (25) to be connected to the forward-flow line (16) and hence to the at least one evaporator (2, 3) by means of the valve (17) which feeds the vapour into the vapour accumulator (21; 30).

12. Apparatus according to one of Claims 9 to 11, **characterized in that** a bypass line (25) which short-circuits the expansion machine (4; 4') opens into an exhaust vapour line (18) downstream of a nonreturn valve (19) arranged in the exhaust vapour line (18), the exhaust vapour line (18) being routed away from the expansion machine (4; 4') to the condenser (5).

13. Apparatus according to one of Claims 9 to 12, **characterized in that** the vapour accumulator (21) is connected via a pressure line (22) containing a controllable valve (23) to the forward-flow line (16a) downstream of a valve (17), in particular a multi-way valve, which feeds the vapour into the vapour accumulator (21; 30), and is connected to said line upstream of the expansion machine (4).

14. Apparatus according to one of Claims 9 to 13, **characterized in that** the vapour accumulator (30) is connected to a reduced-pressure region (4a) of the expansion space in the expansion machine (4'), in parallel with the forward-flow line (16a), by a pressure line (31) containing a controllable valve (23).

15. Apparatus according to one of Claims 9 to 14, **characterized in that** the at least one evaporator (2, 3) is coupled to an exhaust line system of the internal combustion engine and/or **in that** the vapour accumulator (30) or the casing (30a) thereof is heated by means of the exhaust line system of the internal combustion engine.

16. Apparatus according to one of Claims 9 to 15, **characterized in that** the vapour accumulator (21; 30) is connected to an inlet side of the at least one evaporator (2, 3) by means of a controllable valve (26) and of a blow-off line (27).

17. Apparatus according to one of preceding Claims 9 to 16, **characterized in that** the vapour accumulator (30) has a plurality of chambers (30b), which are connected to one another in such a way, by means of pressure relief valves, in particular filling valves (32) and emptying valves (33), that the filling thereof takes place in succession or separately from one another and the emptying thereof takes place in succession or substantially together, and/or **in that** the vapour accumulator (21; 30) is connected to the working medium circuit downstream of the condenser (5) by means of at least one condensate line (28), and/or **in that** the useful volume of the vapour accumulator (21; 30) is designed in such a way that a mass of vapour corresponding to average braking operating phases can be stored.

18. Apparatus according to one of preceding Claims 9 to 17, **characterized in that** a plurality of evaporators (2, 3) is connected to the exhaust line system of the internal combustion engine, which evaporators are connected to a respective feed line (7a, 7b) in the working medium circuit, which feed line can be controlled by means of a flow control valve (10), and to a preferably combined forward-flow line (16) and can be supplied individually, in groups or jointly with working medium under open-loop or closed-loop control by the flow control valve (10).

19. Apparatus according to one of Claims 9 to 18, **characterized in that** a feed pump (8), which supplies the evaporators (2, 3) from a reservoir (6), a suction pump (14), which is positioned upstream of the condenser (5) and delivers into the reservoir (6), preferably with an interposed filter unit (15), and a return line (11) leading to the reservoir (6) and having a pressure limiting valve (12) for the feed pump (8) are provided on the liquid side in the working medium circuit.

20. Motor vehicle, in particular commercial vehicle, very particularly preferably a lorry or bus, having an apparatus according to one of Claims 9 to 19.

## Revendications

1. Procédé de récupération de chaleur et de sa transformation en puissance mécanique dans un système d'entraînement pour véhicules automobiles, dans lequel un fluide de travail guidé dans un circuit de fluide de travail est évaporé à l'aide d'au moins un évaporateur (2, 3) intégré au circuit de fluide de travail au moyen de la chaleur perdue d'un moteur à combustion interne du véhicule automobile, la vapeur générée étant acheminée à une machine d'expansion (4 ; 4') et la vapeur perdue provenant de la machine d'expansion (4 ; 4') étant ensuite ramenée en phase liquide dans au moins un condenseur (5), au moins une soupape commandable et/ou réglable (17, 23) au moyen d'un dispositif de commande et/ou de réglage ainsi qu'un accumulateur de vapeur (21 ; 30) étant intégrés dans le circuit de fluide de travail en aval de l'au moins un évaporateur (2, 3), **caractérisé en ce que** lorsque l'on n'a pas besoin de puissance d'entraînement de la machine d'expansion (4 ; 4') accouplée au moteur à combustion interne et/ou lorsque le moteur à combustion interne n'est pas entraîné par allumage, la vapeur générée est accumulée au moins en partie dans l'accumulateur de vapeur (21 ; 30), la vapeur accumulée dans l'accumulateur de vapeur (21 ; 30), lorsque l'on a besoin d'une puissance d'entraînement de la machine d'expansion (4 ; 4') et/ou lorsque le moteur à combustion interne est entraîné par allumage, étant au moins en partie à nouveau recirculée dans le circuit de fluide de travail en vue d'entraîner la machine d'expansion (4 ; 4').

2. Procédé selon la revendication 1, **caractérisé en ce que** de la vapeur est accumulée dans l'accumulateur de vapeur (21 ; 30), au moins pendant une phase de fonctionnement en mode de poussée formant une phase d'accumulation de vapeur et/ou une phase de fonctionnement en mode de frein moteur du véhicule automobile, et par conséquent l'accumulateur de vapeur (21 ; 30) est connecté fluidiquement à au moins l'un des évaporateurs (2, 3).

3. Procédé selon la revendication 1 ou 2, **caractérisé en ce que** dans une phase de chauffage immédiatement subséquente à la phase d'accumulation de vapeur, d'une part l'accumulateur de vapeur (21 ; 30) est connecté à la machine d'expansion (4 ; 4') et d'autre part l'au moins un évaporateur (2, 3) ou au moins un évaporateur (2, 3) est connecté à une conduite de contournement (25) court-circuitant la machine d'expansion (4 ; 4'), de sorte que la machine d'expansion (4 ; 4') soit alimentée à elle seule en vapeur provenant de l'accumulateur de vapeur (21 ; 30) de préférence jusqu'à ce que le fluide de travail du circuit de fluide de travail soit chauffé au moyen de l'au moins un évaporateur (2, 3) à une température de vapeur chaude définie et/ou prédéfinie.

4. Procédé selon la revendication 3, **caractérisé en ce qu'**une fois atteinte la température de vapeur chaude définie et/ou prédéfinie, l'alimentation en vapeur à partir de l'accumulateur de vapeur (21 ; 30) est arrêtée, la conduite de contournement (25) est ensuite à nouveau bloquée et finalement la machine d'expansion (4 ; 4') est seulement alimentée en vapeur provenant de l'au moins un évaporateur (2 ; 3) lors du fonctionnement usuel de la machine d'expansion.

5. Procédé selon la revendication 3 ou 4, **caractérisé en ce qu'**une fois atteinte la température de vapeur chaude définie et/ou prédéfinie, la conduite de contournement (25) est à nouveau bloquée et ainsi, la machine d'expansion (4 ; 4') est à nouveau alimentée en vapeur provenant de l'au moins un évaporateur (2 ; 3), comme lors d'un fonctionnement usuel de la machine d'expansion, l'alimentation en vapeur à partir de l'accumulateur de vapeur (21 ; 30) étant seulement arrêtée lorsque l'accumulateur de vapeur (21 ; 30) est complètement vide ou est vidé jusqu'à une quantité résiduelle définie.

6. Procédé selon l'une quelconque des revendications précédentes, **caractérisé en ce qu'**une fois atteinte une pression de fonctionnement maximale de l'accumulateur de vapeur (21 ; 30) pendant la phase d'accumulation de vapeur, une conduite de contournement (25) court-circuitant la machine d'expansion (4 ; 4') est libérée et/ou ouverte.

7. Procédé selon l'une quelconque des revendications précédentes, **caractérisé en ce que** pendant les phases de poussée et/ou de frein moteur, le système de gaz d'échappement du moteur à combustion interne sert de source de chaleur pour l'au moins un évaporateur (2, 3), en particulier lorsque le moteur à combustion interne présente dans la ligne d'échappement au moins un dispositif d'étranglement pour générer la puissance de frein moteur, et/ou **en ce que** l'accumulateur de vapeur (30) est chauffé par le gaz d'échappement du moteur à combustion interne.

8. Procédé selon l'une quelconque des revendications précédentes, **caractérisé en ce que** la vapeur accumulée dans l'accumulateur de vapeur (21 ; 30), en particulier lors de l'arrêt du moteur à combustion interne et/ou dans le cas de températures hivernales, est utilisée pour évacuer par soufflage du fluide de travail de condensation à partir de pièces fonctionnelles (2, 3, 17, 16, 18) du circuit de fluide de travail.

9. Dispositif pour mettre en oeuvre un procédé de récupération de chaleur et de sa transformation en puissance mécanique dans un système d'entraînement pour véhicules automobiles, en particulier pour mettre en oeuvre un procédé selon l'une quelconque des revendications de procédé précédentes, comprenant un moteur à combustion interne en tant que source d'entraînement, une machine d'expansion (4 ; 4') accouplée par entraînement au moteur à combustion interne, qui est raccordée à au moins un évaporateur (2, 3) pouvant être chauffé par la chaleur perdue du moteur à combustion interne et qui est branché dans un circuit de fluide de travail avec au moins un condenseur (5), **caractérisé en ce que** dans une conduite aller (16) du circuit de fluide de travail en aval de l'au moins un évaporateur (2, 3) est disposée au moins une soupape (17, 23) commandable et/ou réglable au moyen d'un dispositif de commande ou de réglage, au moyen de laquelle lorsque l'on n'a pas besoin de puissance d'entraînement de la machine d'expansion (4 ; 4') et/ou lorsque le moteur à combustion interne n'est pas entraîné par allumage, la conduite aller (16) peut être connectée à un accumulateur de vapeur (21 ; 30) et/ou la machine d'expansion (4 ; 4') peut être bloquée.

10. Dispositif selon la revendication 9, **caractérisé en ce que** dans la conduite aller (16) est prévue une soupape à plusieurs voies (17) au moyen de laquelle la machine d'expansion (4 ; 4') et/ou l'accumulateur de vapeur (21 ; 30) peuvent être connectés à l'au moins un évaporateur (2, 3).

11. Dispositif selon la revendication 9 ou 10, **caractérisé en ce qu'**une conduite de contournement (25) court-circuitant la machine d'expansion (4 ; 4'), de préférence une conduite de contournement (25) avec une soupape d'étranglement (24), est raccordée à la soupape (17) commandant l'entrée de la vapeur dans l'accumulateur de vapeur (21 ; 30), qui est notamment une soupape à plusieurs voies, l'accumulateur de vapeur (21 ; 30) et/ou la machine d'expansion (4 ; 4') et/ou la conduite de contournement (25) pouvant être connectés par le biais de la soupape (17) commandant l'entrée de la vapeur dans l'accumulateur de vapeur (21 ; 30) à la conduite aller (16) et par conséquent à l'au moins un évaporateur (2, 3).

12. Dispositif selon l'une quelconque des revendications 9 à 11, **caractérisé en ce qu'**une conduite de contournement (25) court-circuitant la machine d'expansion (4 ; 4') débouche en aval d'un clapet antiretour (19) disposé dans une conduite d'évacuation de vapeur (18) dans la conduite d'évacuation de vapeur (18), la conduite d'évacuation de vapeur (18) étant guidée à l'écart du condenseur (5) depuis la machine d'expansion (4 ; 4').

13. Dispositif selon l'une quelconque des revendications 9 à 12, **caractérisé en ce que** l'accumulateur de vapeur (21) est connecté, par le biais d'une conduite de pression (22) présentant une soupape commandable (23), à la conduite aller (16a) en aval d'une soupape (17) commandant l'entrée de la vapeur dans l'accumulateur de vapeur (21 ; 30), en particulier d'une soupape à plusieurs voies, et en amont de la machine d'expansion (4) à cette dernière.

14. Dispositif selon l'une quelconque des revendications 9 à 13, **caractérisé en ce que** l'accumulateur de vapeur (30) est connecté par le biais d'une conduite de pression (31) présentant une soupape commandable (23), parallèlement à la conduite aller (16a), à une région réduisant la pression (4a) de l'espace d'expansion de la machine d'expansion (4').

15. Dispositif selon l'une quelconque des revendications 9 à 14, **caractérisé en ce que** l'au moins un évaporateur (2, 3) est accouplé à un système de conduite de gaz d'échappement du moteur à combustion interne et/ou **en ce que** l'accumulateur de vapeur (30) ou son boîtier (30a) est chauffé par le système de conduite de gaz d'échappement du moteur à combustion interne.

16. Dispositif selon l'une quelconque des revendications 9 à 15, **caractérisé en ce que** l'accumulateur de vapeur (21 ; 30) est raccordé par le biais d'une soupape commandable (26) et d'une conduite de soufflage (27) à un côté d'entrée de l'au moins un évaporateur (2, 3).

17. Dispositif selon l'une quelconque des revendications précédentes 9 à 16, **caractérisé en ce que** l'accumulateur de vapeur (30) présente plusieurs chambres (30b) qui sont connectées les unes aux autres par le biais de soupapes de surpression, en particulier de soupapes de remplissage (32) et de soupapes de vidange (33), de telle sorte que leur remplissage s'effectue successivement ou séparément les unes des autres et que leur vidange s'effectue successivement ou essentiellement en commun, et/ou **en ce que** l'accumulateur de vapeur (21 ; 30) est connecté par le biais d'au moins une conduite de condensat (28) au circuit de fluide de travail en aval du condenseur (5) et/ou **en ce que** le volume utilisable de l'accumulateur de vapeur (21 ; 30) est conçu de telle sorte qu'une masse de vapeur correspondant à des phases de fonctionnement de freinage moyennes puisse être accumulée.

18. Dispositif selon l'une quelconque des revendications précédentes 9 à 17, **caractérisé en ce que** plusieurs évaporateurs (2, 3) sont raccordés au système de conduite de gaz d'échappement du moteur à combustion interne, lesquels sont connectés à chaque fois à une conduite d'alimentation (7a, 7b) commandable par le biais d'une soupape de régulation d'écoulement (10) dans le circuit de fluide de travail et à une conduite aller (16) de préférence regroupée, et peuvent être sollicités de manière commandée et/ou régulée par le biais des soupapes de régulation d'écoulement (10) individuellement, en groupe ou en commun avec du fluide de travail.

19. Dispositif selon l'une quelconque des revendications 9 à 18, **caractérisé en ce que** dans le circuit de fluide de travail, du côté liquide, sont prévues une pompe d'alimentation (8) alimentant les évaporateurs (2, 3) à partir d'un réservoir (6), une pompe d'aspiration (14) positionnée en amont du condenseur (5) et refoulant dans le réservoir (6), de préférence avec une unité de filtre (15) montée entre elles, et une conduite de retour (11) au réservoir (6) présentant une soupape de limitation de la pression (12) pour la pompe d'alimentation (8).

20. Véhicule automobile, en particulier véhicule utilitaire, plus particulièrement véhicule poids-lourds ou bus, comprenant un dispositif selon l'une quelconque des revendications 9 à 19.
